# EUROPEAN PATENT SPECIFICATION

(11) **EP 3 482 615 B1**
(45) Date of publication and mention of the grant of the patent: **23.09.2020**
(21) Application number: 18205538.4
(22) Date of filing: 09.11.2018
(51) Int. Cl.: A01C 5/04, A01C 7/04

(54) **SOWING MACHINE FOR DISTRIBUTING SEEDS ON THE GROUND**
SÄMASCHINE ZUM VERTEILEN VON SAATGUT AUF DEM BODEN
SEMOIR POUR LA DISTRIBUTION DE GRAINES SUR LE SOL

(30) Priority: 10.11.2017 IT 201700128805
(43) Date of publication of application: 15.05.2019
(73) Proprietor: ROTER ITALIA S.r.l., 46035 Ostiglia (MN) (IT)
(72) Inventor: FORIGO, Alberto, Ostiglia (MN) (IT)
(74) Representative: Gallo, Luca

(56) References cited:
- WO-A1-2017/040533
- FR-A1- 2 570 922
- US-A- 5 535 917
- US-A1- 2007 193 482
- US-A1- 2010 282 143

## Description

### Field of application

The present invention regards a sowing machine for distributing seeds on the ground.

The present machine is inserted in the context of the industrial field of production of farming machines and it is advantageously intended to be connected to a tractor in order to be driven over the ground intended to receive the seeds.

The present sowing machine is of precision type, adapted to precisely deposit doses of seeds on the ground, aligned along a direction substantially parallel to the advancing direction of the tractor.

Therefore, the sowing machine, object of the present invention, is advantageously employed in the industrial field of production of planters for cultivations, for example vegetable cultivations and in particular for cultivations of terrain treated by means of mulching.

### State of the art

In the field of production of farming machines, sowing machines for distributing seeds on the ground in an automated manner have been known for some time. Such sowing machines are mechanically connectable, in a removable manner, to drive machines, normally farming tractors, in order to be driven on the ground intended to host the seeds to be distributed.

As is known, the sowing machines are adapted to distribute the seeds on the ground, aligning them along one or more tracks that are substantially parallel to each other and parallel to the advancing direction of the tractor.

The sowing machines of known type are provided with a support frame mechanically connectable to the tractor, with a hopper supported by the support frame intended to contain the seeds to be distributed and with at least one wheel rotatably and idly mounted on the support frame itself, susceptible of rotating on the ground via rolling friction and supporting the sowing machine during the sowing operations, driven by the tractor.

Normally, the sowing machine of known type is provided with a blade projecting on the lower part, with curved form and susceptible of being partially inserted in the ground in order to make a rectilinear groove in the ground.

The hopper supported by the support frame is normally placed in communication with a metering device, placed below the sowing machine, it too fixed to the support frame and placed behind the blade with respect to the advancing sense of the tractor.

In this manner, during the sowing operations, the sowing machine driven by the tractor distributes in the rectilinear groove, formed by means of the aforesaid blade, the seeds in a substantially uniform manner.

The sowing machine of known type, briefly described above, has in practice shown that it does not lack drawbacks.

The main drawback lies in the fact that such sowing machine of known type uses a large quantity of seeds during the sowing operations, since it continuously distributes the seeds within the rectilinear groove, in fact making the seeds themselves quite costly.

A further drawback lies in the fact that the sowing machine of known type is not usable on terrain treated by means of mulching.

As is known, with the technical term "mulching" it is intended covering the ground with at least one layer of protection material (e.g. by means of covering the ground with a sheet of plastic material or with a bark layer), in order to prevent the growth of weeds, or more generally to protect the ground from external agents and maintain the properties thereof without requiring further treatments.

Indeed, the blade projecting on the lower part of the sowing machine of known type, described above, if used on a ground treated by means of mulching would form the aforesaid rectilinear groove on the layer of protection material, allowing external agents to come into contact with the ground itself and therefore considerably negatively affecting the protective capacity of the protection material layer placed to cover the ground.

For the purpose of at least partially overcoming the drawbacks manifested by the sowing machines of known type, briefly described above, in the industrial field of production of farming machines, sowing machines have been known for some time that are normally termed, in the technical jargon of the field, precision sowing machines.

Such sowing machines are normally provided with a distribution disc rotatably mounted on the support frame around a substantially horizontal axis. Such disc carries, mounted thereon, a plurality of distribution spouts placed in flow connection with the hopper supported by the frame.

The spouts are radially arranged and terminate at the external edge of the distribution disc, and are extended at least for a terminal section thereof outside the disc itself.

Such terminal section of each of the distribution spouts is intended to be cyclically at least partially immersed in the ground, in order to lay a corresponding dose of seeds that are coming from the hopper in the ground.

In operation, the distribution disc is rotated around its horizontal axis by the reactive force that the ground imparts on the terminal sections of the spouts that interfere with the ground during the movement of the sowing machine driven by the tractor.

One example of sowing machine of known type and termed "precision" sowing machine, briefly described above, is described in the document WO 2014/170767.

However, even the sowing machine of known type briefly described above has in practice shown that it does not lack drawbacks.

The main drawback lies in the fact that the sowing machine of known type allows precisely distributing doses of seeds at a pre-established distance, i.e. at a distance equal to the length of the circular arc which is defined between two contiguous spouts.

If the user requires varying the distance between two successive deposits of doses of seeds, he/she must change sowing machine and use one with a different number of spouts or with a distribution disc provided with different diameter, so as to vary the length of the circular arc defined by the aforesaid two contiguous spouts.

A further drawback lies in the fact that in order to vary the number of spouts, the sowing machine of known type does not provide for the possibility to only change the distribution disc, mounting one of these with a different number of spouts, since even by varying the latter it would not be possible to feed them with the doses of seeds to be distributed as it would be necessary to change all the connections of the spouts with the containment hopper, considerably increasing the time necessary for completing the operation, the difficulty of execution thereof and hence the general management costs of the sowing machine itself.

The document FR 2570922 discloses a sowing machine for distributing seeds on the ground, which comprises a distribution disc rotatably mounted on a support structure and which carries, peripherally mounted thereon, a plurality of equidistant distribution spouts and a rotor peripherally provided with a plurality of equidistant cells, each adapted to contain a dose of seeds to be distributed; the rotor being placed inside the disc so as to rotate with in contact with its internal surface on which the openings for feeding the spouts are made. The rotation of the rotor is ensured by several pinions which are moved by the disc. One drawback of the machine described in the document FR 2570922 lies in the fact that it is unable to manage the synchronization between the cells of the rotor and the spouts of the disc as the number of spouts varies according to the distance of sowing on the ground.

The document US 2007/0193482 discloses a seed planter comprising a rotary disc having a series of equally spaced seed cups mounted on the internal surface of the cylindrical peripheral wall, and a seed meter mounted over a curved path of the seed cups, in a narrow and spaced relationship over the large upper openings of the seed cups in order to receive the seeds. The rotary drum is moved by the contact with the ground while the seed meter is moved by means of transmission means connected to the rotary drum.

The document US 5.535.917 discloses a distributor for a seed spacing drill, having an overall cylindrical shape, inside of which a flat distributor disc is rotatably mounted. The distributor disc is provided with circumferentially-spaced holes which have dimensions smaller than the seeds to be distributed. The distributor disc separates a seed container from a suction device so that the holes are subjected to a reduced pressure in order to retain the seeds taken up from the container during at least one part of their angular travel. A deflector member is provided for eliminating the double seeds. A device is provided for discharging the seeds. The distributor disc comprises at least two coaxial circular rows of holes which are subjected to the suction or reduced pressure until the holes are aligned with the discharge device. The deflector is located, relative to said distributor disc, so as to act only on the seeds located in the holes of the end or the innermost row.

### Presentation of the invention

The main object of the present invention is therefore that of overcoming the drawbacks manifested by the solutions of known type, by providing a sowing machine for distributing seeds on the ground which allows varying the deposit distance of two successive doses of seeds without having to change sowing machine.

Another object of the present invention is to provide a sowing machine for distributing seeds on the ground that is entirely functional and reliable in operation.

Another object of the present invention is to provide a sowing machine for distributing seeds on the ground which is easy and intuitive to use.

Another object of the present invention is to provide a sowing machine for distributing seeds on the ground that is long-lasting and which does not require frequent maintenance operations

The invention which overcomes the drawbacks of the prior art provides a sowing machine according to claim 1.

### Brief description of the drawings

The technical characteristics of the finding, according to the aforesaid objects, can be clearly seen in the contents of the below-reported claims and the advantages thereof will be more evident from the following detailed description, made with reference to the enclosed drawings, which represent a merely exemplifying and non-limiting embodiment of the invention in which:

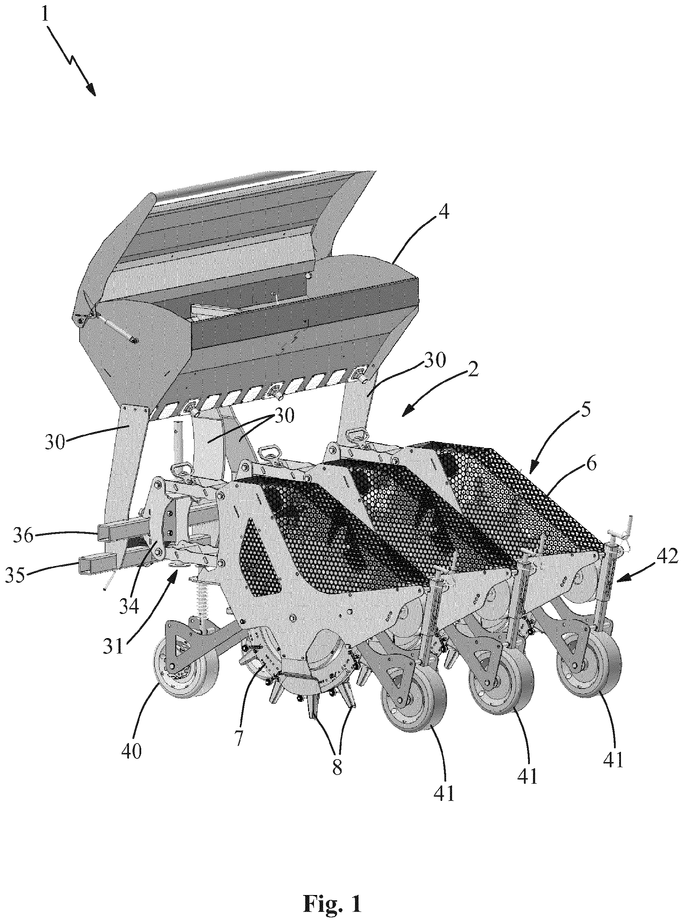

- figure 1 shows a front perspective view of a sowing machine for distributing seeds on the ground, object of the present invention;

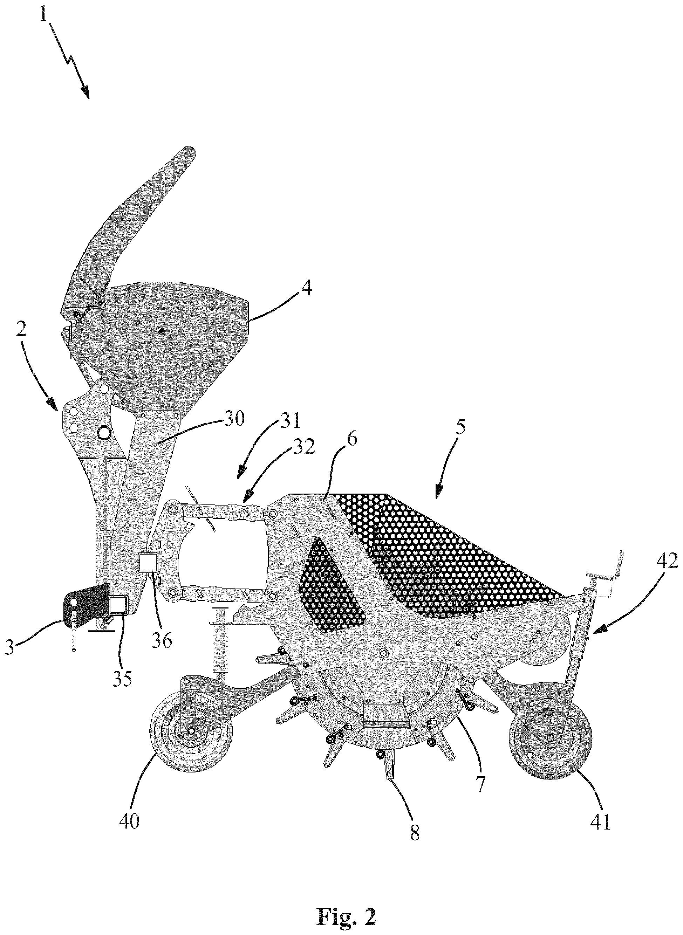

- figure 2 shows a side view of the sowing machine for distributing seeds on the ground, object of the present invention;

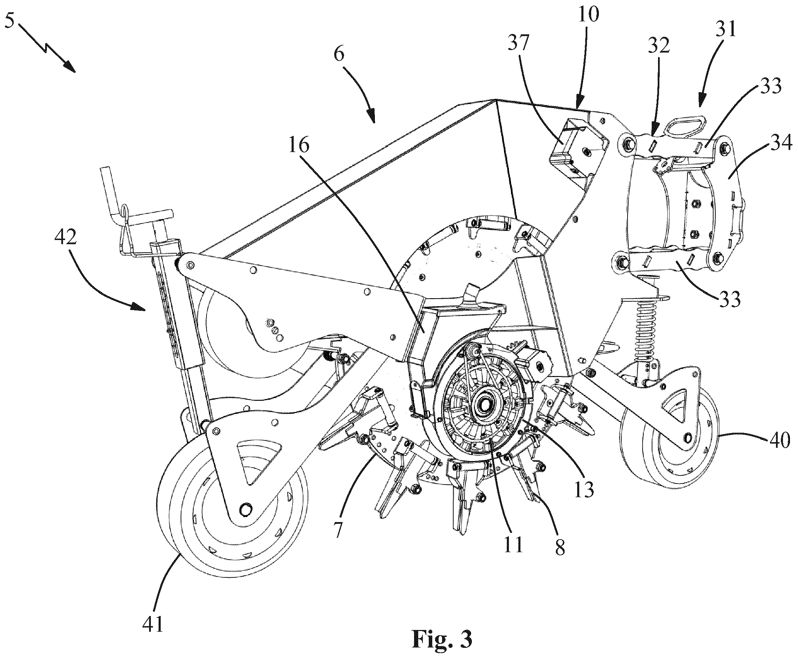

- figure 3 shows a perspective side view of a sowing unit of the sowing machine for distributing seeds on the ground, object of the present invention;

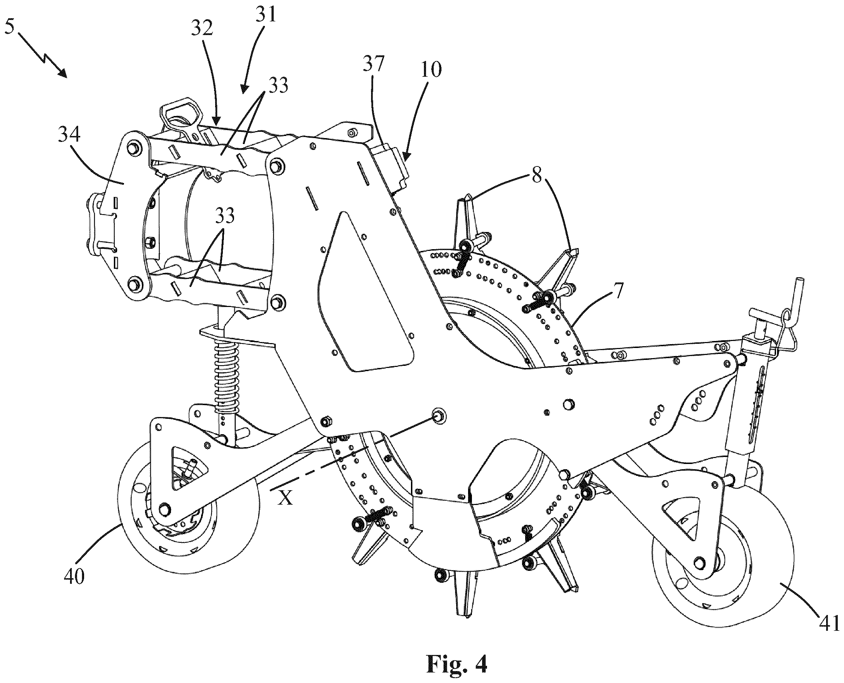

- figure 4 shows a perspective side view of a sowing unit of the sowing machine for distributing seeds on the ground, object of the present invention, with some parts removed in order to better illustrate other parts;

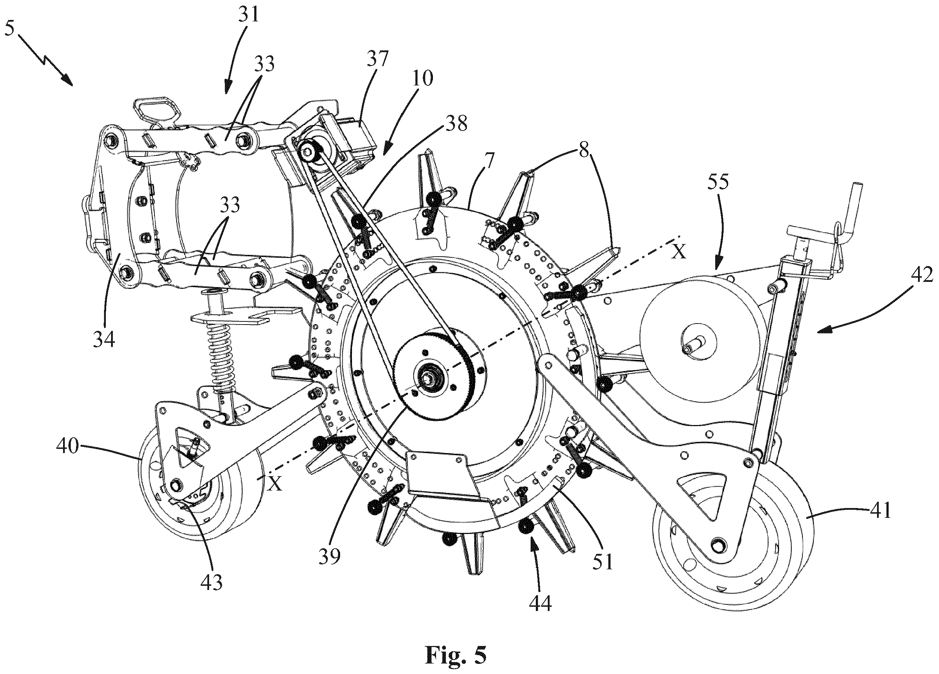

- figure 5 shows a perspective side view of a sowing unit of the sowing machine for distributing seeds on the ground, object of the present invention, with some parts removed in order to better illustrate other parts;
- figure 6 shows a perspective side view of a sowing unit of the sowing machine for distributing seeds on the ground, object of the present invention, with some parts removed in order to better illustrate other parts and a schematic diagram of a logic control unit;
- figure 7 shows a perspective view of distribution means of the sowing unit of the sowing machine, object of the present invention;
- figure 8 shows a perspective view of a rotor of the distribution means of the sowing unit of the sowing machine for distributing seeds on the ground, object of the present invention;

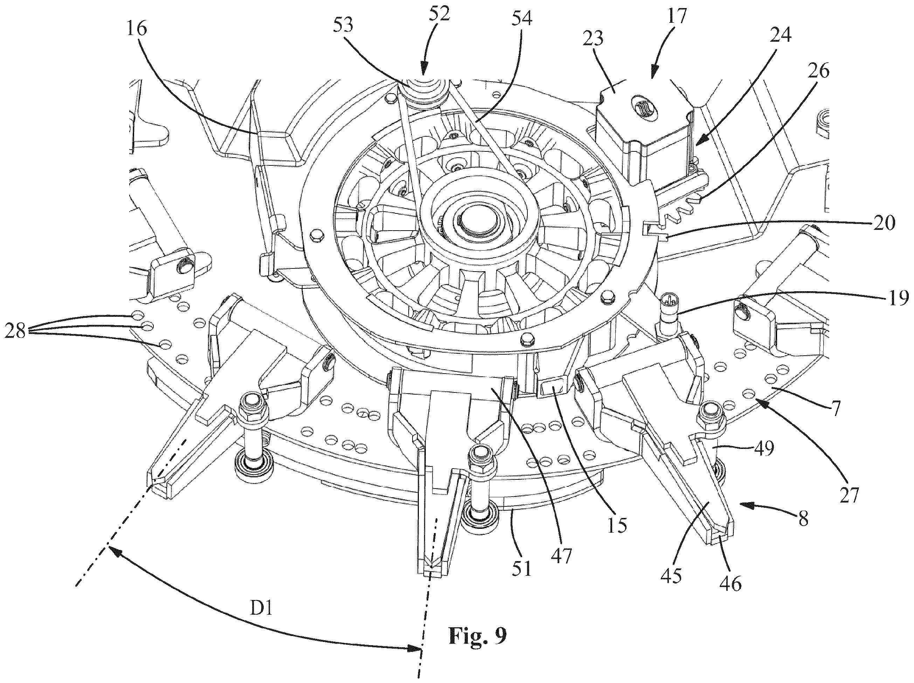

- figure 9 shows a detail of the sowing machine for distributing seeds on the ground, object of the present invention, regarding the distribution means and distribution spouts;

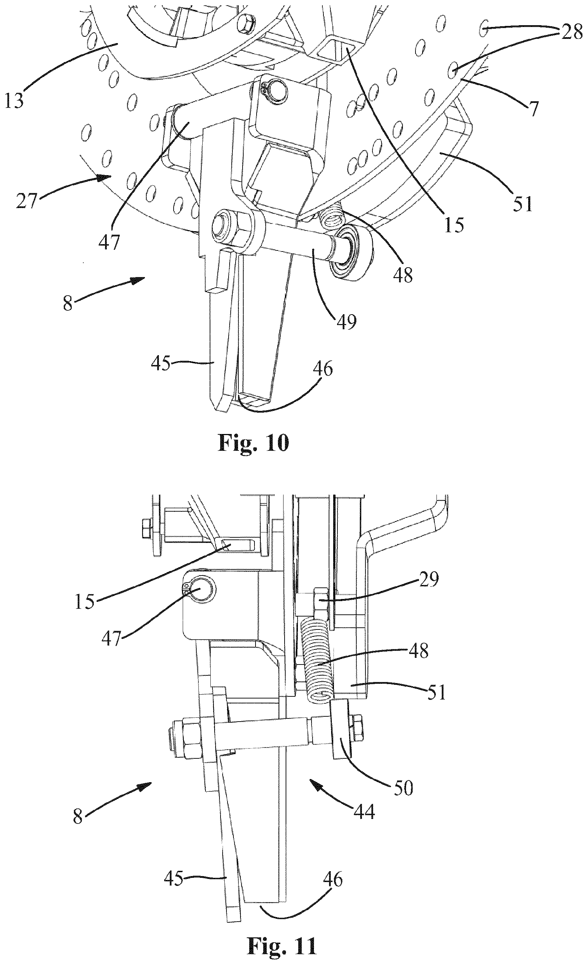

- figure 10 shows a detail of the sowing machine for distributing seeds on the ground, object of the present invention, regarding one of the distribution spouts;
- figure 11 shows a detail of the sowing machine for distributing seeds on the ground, object of the present invention, regarding one of the distribution spouts;

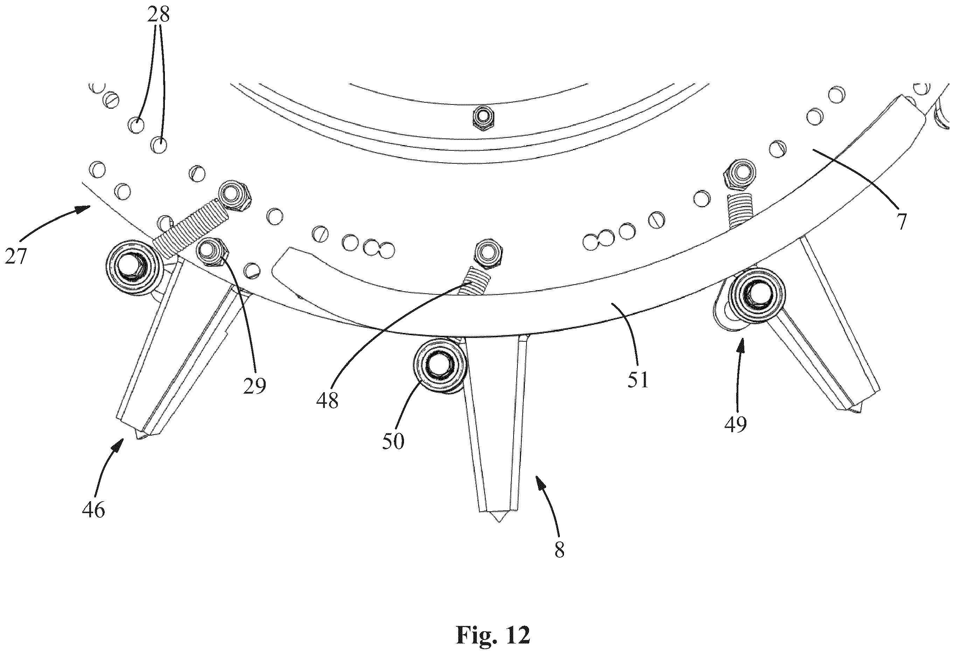

- figure 12 shows a detail of the sowing machine for distributing seeds on the ground, object of the present invention, regarding the distribution spouts.

### Detailed description of a preferred embodiment

With reference to the enclosed drawings, reference number 1 overall indicates the sowing machine for distributing seeds on the ground, object of the present invention, which is intended to be fixed to a tractor, such as a tractor with wheels or with tracks of farming type.

The sowing machine for distributing seeds on the ground 1 is adapted to be advantageously employed for distributing over farming terrain seeds for future cultivations, for example vegetable cultivations.

With the term "seeds" it must be intended hereinbelow any type of seed that is susceptible of being laid on or in the ground in order to germinate and grow at least one plant of any type, purpose and nature.

Normally, the present seeds are in the form of grains and are laid in the ground at a depth of several centimeters, e.g. a depth comprised between 2 and 10 cm.

The sowing machine 1, object of the present invention, is employable for precisely distributing the seeds in aligned holes made on the ground, in particular for vegetable cultivation.

Otherwise, the sowing machine 1, object of the present invention, is advantageously also employable for precisely depositing the aligned seeds on the surface of the ground, substantially without perforating it, for example for vegetable cultivation.

Advantageously, the sowing machine 1 is employable for distributing seeds on the ground treated by means of mulching, i.e. on which a layer of protection material was previously arranged, such as a sheet of plastic material, or a sheet of biofilm or even a layer of bark chips, in order to protect the ground itself from external agents and prevent the formation of weeds.

According to the invention, the sowing machine 1 comprises a support frame 2 intended to be fixed to a tractor at coupling points 3.

Preferably, the support frame 2 is made of metal material, in particular a resistant metal material such as steel.

In accordance with the preferred embodiment illustrated in the enclosed figures, the coupling points 3 are of three-point attachment type, and per se well-known to the man skilled in the art and therefore not described in detail hereinbelow.

The sowing machine 1 also comprises at least one hopper 4 for containing seeds to be distributed supported by the support frame 2.

In operation, the containment hopper 4 is intended to contain the seeds to be distributed and to be filled before starting the sowing by means of the sowing machine 1, object of the present invention.

Advantageously, the containment hopper 4 is supported in raised position and is sustained by at least two substantially vertical uprights 30 and with particular reference to the embodiment illustrated in the enclosed figures, the containment hopper 4 is supported by four substantially vertical uprights 30.

According to the invention, the sowing machine 1 comprises at least one sowing unit 5, each provided with a support structure 6, which is advantageously mechanically connected to the support frame 2 of the sowing machine 1 by means of connection means 31.

In accordance with the preferred but non-limiting embodiment illustrated in the enclosed figures, the sowing machine 1 comprises three sowing units 5 and the connection means 31 consist of an articulated quadrilateral and in particular of an articulated parallelogram 32.

Of course, the sowing machine 1 can comprise any number of sowing units 5 mechanically connected to the support frame 2 without departing from the protective scope of the present patent.

Preferably, the sowing units 5 are connected to the support frame 2 and are substantially side-by-side in order to form parallel strips of precisely-deposited seeds, parallel to the advancing direction of the tractor to which the sowing machine 1, object of the present invention, is fixed.

In this manner, during the sowing operations, each sowing unit 5 is free to be moved along a direction that is substantially vertical with respect to the support frame 2 fixed to the tractor, in order to follow possible roughness of the ground on which the seeds are distributed, remaining substantially parallel to the ground itself.

More in detail, the articulated parallelogram 32 of the connection means 31 comprises four arms 33 that are two-by-two parallel, pivoted at their ends on one side to a bracket 34 fixed to the support frame 2 and on the other side to the support structure 6.

Advantageously, the support frame 2 of the sowing machine 1 comprises a first crosspiece 35 arranged along an axis that is substantially orthogonal with respect to the advancement direction of the tractor, and in particular along a substantially horizontal direction, which supports on the upper part the uprights 30 of the containment hopper 4.

In addition, the support frame 2 advantageously comprises a second crosspiece 36 substantially parallel to the first crosspiece 35 and carrying, mounted thereon, the brackets 34, preferably equidistant with respect to each other, of the articulated parallelograms 32 of the connection means 31 of each sowing unit 5.

Preferably, the first crosspiece 35 and the second crosspiece 36 have elongated form with substantially quadrilateral section and are made of metal material.

The sowing machine 1, object of the present invention, also comprises at least one distribution disc 7 rotatably mounted on the support structure 6 in a position raised from the ground and carrying, peripherally mounted thereon, a plurality of equidistant distribution spouts 8.

More in detail, the distribution disc 7 is placed in a substantially central position of the support structure 6 of each sowing unit 5 and is preferably made of metal material.

The sowing machine 1 also comprises distribution means 9 mounted on the support structure 6 connected to the hopper 4 in order to receive the seeds therefrom, and cyclically in communication with the distribution spouts 8 in order to release a dose of seeds at their interior.

The sowing machine 1 according to the invention also comprises first motorization means 10 connected to the distribution disc 7 in order to rotate it around a rotation axis X substantially orthogonal to the advancement direction of the sowing machine 1.

In accordance with the preferred embodiment illustrated in the enclosed figures, the first motorization means 10 comprise a first motor 37 fixed to the support structure 6 of each sowing unit 5, a transmission belt 38 closed as a ring and wound around the drive shaft of the first motor 37 and around a pulley 39 fitted on the distribution disc 7 in order to drive it in rotation.

Preferably, between the first motor 37 and its drive shaft, a gear motor is interposed in order to rotate the distribution disc 7 at a velocity suitable for the sowing operations.

In this manner, the distribution disc 7 is actively brought in rotation through its rotation axis X, in an entirely independent manner.

Advantageously, moreover, the first motorization means 10 are mounted on the support structure 6, and in particular the first motor 37 is fixed to a plate of the support structure 6.

With reference to the particular embodiment illustrated in the enclosed figures, the sowing machine 1, object of the present invention, comprises at least one positioning wheel idly mounted on the support structure 6, which defines the height of said sowing unit 5 with respect to the ground.

Otherwise, in accordance with a further embodiment not illustrated in the enclosed figures, the at least one positioning wheel is idly mounted on the support frame 2 of the sowing machine 1 and is advantageously placed laterally with respect to the at least one sowing unit 5.

Advantageously, with reference to the particular embodiment illustrated in the enclosed figures, the at least one positioning wheel comprises a front wheel 40 supported by the support structure 6 in front of the distribution disc 7 in the advancement sense of the sowing machine 1, and a rear wheel 41 supported by the support structure 6 behind the distribution disc 7 in the advancement sense of the sowing machine 1.

Advantageously, each sowing unit 5 of the sowing machine 1, object of the present invention, comprises actuation means 42 associated with the rear wheel 41 in order to vary the height of the support structure 6 with respect to the ground.

More in detail, the actuation means 42 comprise a linear actuator, such as a screw engaged in a nut screw or hydraulic or pneumatic piston, susceptible of being actuated in order to be moved between a retracted configuration in which the sowing unit 5 is proximal to the ground and an extended position in which the sowing unit 5 is distal with respect to the ground, bringing the distribution disc 7 into a substantially raised position.

According to the idea underlying the present invention, the distribution means 9 comprise a rotor 11 peripherally provided with a plurality of equidistant cells 12, each adapted to contain a dose of seeds to be distributed.

The distribution means 9 also comprise a stator 13 fixed to the support structure 6 externally around the rotor 11.

Advantageously, the stator 13 of the distribution means 9 is part of the support structure 6 and can be integrally made with the material with which the support structure 6 itself is composed, or it is fixed to the latter, e.g. by means of welding.

According to the invention, the stator 13 is provided with at least one first opening 14 for cyclically feeding the cells 12 with the doses of seeds and with one second opening 15 for receiving the doses of seeds from the cells 12 and cyclically discharging them into the distribution spouts 8 of the plurality of spouts.

The sowing machine 1, object of the present invention, also comprises at least one manifold 16 mechanically associated with a first opening 14 of the stator 13 in connection with the containment hopper 4 and cyclically with the cells 12 in order to transfer thereto the doses of seeds to be distributed.

Preferably, the manifold 16 is at least partially embedded in the stator 13, and it is provided on the upper part with a feed mouth placed in flow connection with the containment hopper 4 by means of a connection tube, not illustrated in the enclosed figures and per se well-known to the man skilled in the art.

The sowing machine 1 also comprises second motorization means 17 connected to the rotor 11 of the distribution means 9 in order to rotate it inside the stator 13, so as to cyclically face the cells 12 of the rotor 11 itself at the first opening 14.

According to the invention, the second motorization means 17 comprise at least one second motor 23 fixed to the support structure 6 or to the stator 13. In addition, transmission means 24 are provided that are connected to the second motor 23 and to the rotor 11 in order to rotate the latter.

In accordance with the preferred embodiment illustrated in the enclosed figures, the second transmission means 24 comprise a first gear wheel 25 peripherally fixed to the rotor 11 and a second gear wheel 26 fitted on the shaft of the second motor 23 and mechanically engaged with the first gear wheel 25.

According to the idea underlying the present invention, the sowing machine 1 also comprises a logic control unit 18 electrically connected to the first motorization means 10 and to the second motorization means 17.

The logic control unit 18 controls the first motorization means 10 and the second motorization means 17, synchronizing the position of the distribution spouts 8 and of the cells 12 at the second opening 15.

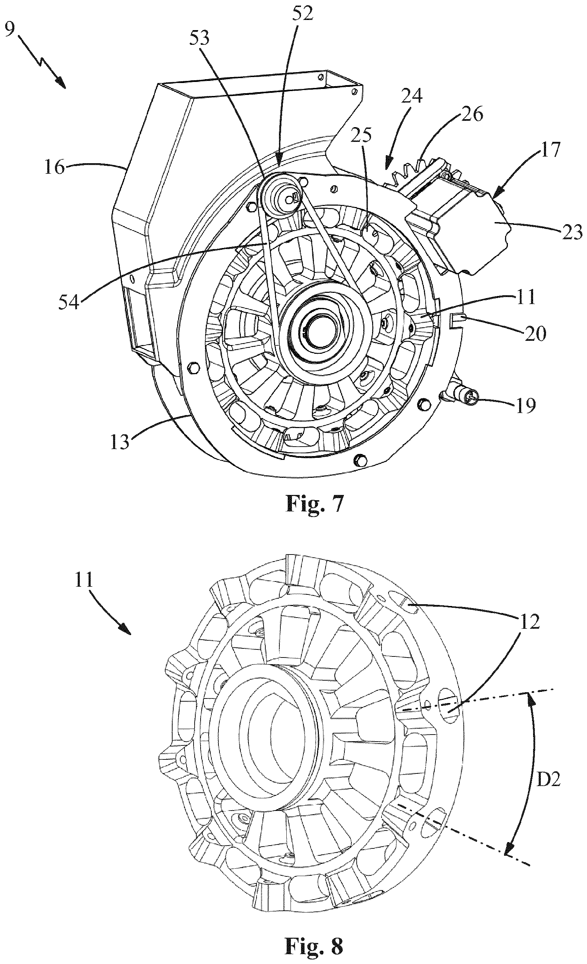

In accordance with the preferred embodiment illustrated in the enclosed figures, the sowing machine 1 comprises at least one first sensor 19 mechanically associated with the support structure 6 (in particular, with reference to the enclosed figure 7, associated with the stator 13 of the distribution means 9) and connected to the logic control unit 18, adapted to detect the passage of the distribution spouts 8 of the plurality of spouts, mounted on the distribution disc 7.

Advantageously, the first sensor 19 detects an appendage 21 of the distribution spouts 8. More in detail, the first sensor 19 is positioned facing the passage trajectory of the spouts 8 and each appendage 21 projects parallel to the lying plane of the distribution disc 7.

The first sensor 19 sends a first electrical signal to the logic control unit 18 containing the information of the position of each distribution spout 8 fixed to the distribution disc 7.

Advantageously, the sowing machine 1 also comprises a second sensor 20 mechanically associated with the support structure 6, connected to the logic control unit 18 and adapted to detect the passage of the cells 12 of the plurality of cells of the rotor 11 of the distribution means 9.

Advantageously, the second sensor 20 detects a metal element fixed to the rotor 11 at the cells 12. More in detail, the second sensor 20 is positioned substantially facing the cells 12.

The second sensor 20 sends a second electrical signal to the logic control unit containing the information of the position of each cell 12 of the rotor 11.

In accordance with the preferred embodiment illustrated in the enclosed figures, the sowing machine 1 comprises at least one velocity sensor 22 connected to said logic control unit 18 in order to adjust the relative tangential velocity of the distribution spouts 8 with respect to the ground.

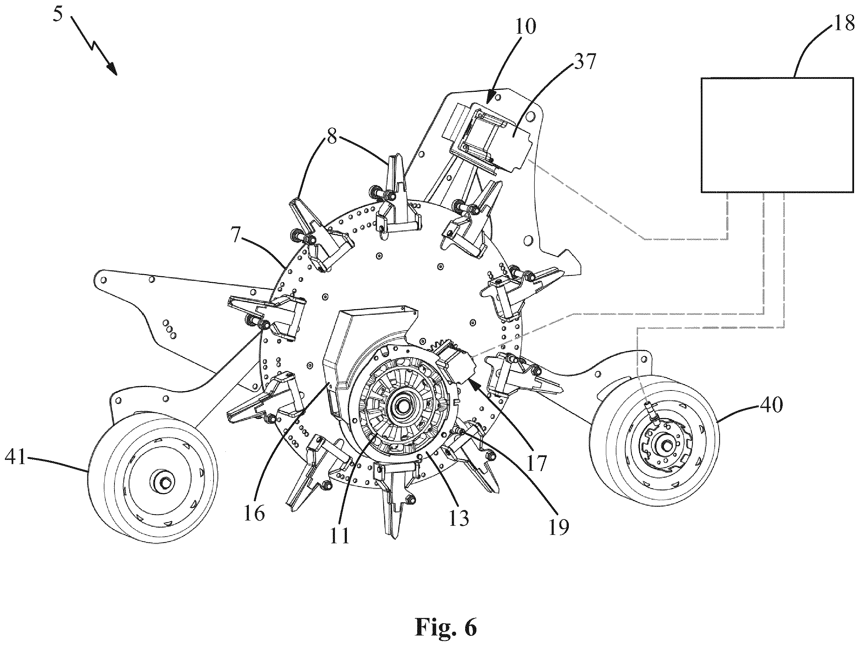

More in detail, with particular reference to the enclosed figure 6, the velocity sensor 22 is mechanically fixed to the front wheel 40 of the at least one positioning wheel of each sowing unit 5 and is adapted to detect the passage of notching 43 susceptible of rotating integrally with the aforesaid front wheel 40.

In this manner, the velocity sensor 22 detects the rotation speed of the front wheel 40 and sends a corresponding third electrical signal to the logic control unit 18.

The logic control unit 18 is configured in order to receive and process the first electrical signal coming from the first sensor 19, the second electrical signal coming from the second sensor 20 and the third electrical signal coming from the velocity sensor 22.

In operation, the logic control unit 18 processes the third electrical signal coming from the velocity sensor 22 in order to calculate the advancing speed of the sowing machine 1 and send a corresponding first command signal to the first motorization means 10 in order to rotate the distribution disc 7.

More in detail, the logic control unit 18 rotates the distribution disc 7 provided with a tangential velocity such that each distribution spout 8 reaches the ground with zero relative velocity with respect to the latter, in order to distribute the doses of seeds on the ground in an optimal manner.

In addition, the electronic control unit 18 processes the first signal coming from the first sensor 19 and the second signal coming from the second sensor 20 and sends a corresponding second command signal to the second motorization means 17 in order to rotate the rotor 11 of the distribution means 9.

More in detail, the rotor 11 is rotated, synchronized with the distribution disc 7.

With the term "synchronized", it must be intended hereinbelow a work condition in which the rotor 11 of the distribution means 9 and the distribution disc 7 rotate, respectively bringing the cells 12 and the distribution spouts 8 to be aligned at least when they reach the second opening 15, in order to allow the metering of seeds contained in each cell 12 within the corresponding distribution spout 8, which is aligned below the cell 12.

Advantageously, the logic control unit 18 commands the first motorization means 10 and the second motorization means 17 to rotate the distribution disc 7 and the rotor 11 with a ratio of their tangential velocities equal to the ratio between the length of a first arc of circumference D1 which is defined between two contiguous spouts 8 and the length of a second arc of circumference D2 which is defined between two contiguous cells 12.

Advantageously, the sowing machine 1 comprises fixing means 27 for fixing the distribution spouts 8 along a circumferential edge of the distribution disc 7, and equidistant at selectable distance.

Preferably, in accordance with the preferred embodiment illustrated in the enclosed figures, the distribution spouts 8 are all fixed on a same first face of the distribution disc 7.

In this manner, it is possible to remove or add distribution spouts 8 from/to distribution disc 7 by acting on the fixing means, in a quick and secure manner and hence it is possible to vary the distance between two continuous distribution spouts 8. Therefore, it is possible to vary the sowing pitch without having to change the distribution disc 7.

In this manner, it is possible to vary, in a quick and easy manner, the number of the distribution spouts 8 mounted on the distribution disc 7 based on the type of cultivation and on the type of ground on which the doses of seeds are distributed. Indeed, with the variation of the plants that one wishes to grow, it is necessary to vary the sowing pitch, i.e. the distance between two contiguous spouts 8.

With the variation of the number of distribution spouts 8, the logic control unit 18 commands the first motorization means 10 and the second motorization means 17 in order to newly synchronize the rotation of the rotor 11 and of the distribution disc 7 such that the each cell is aligned with a corresponding distribution spout 8 when these pass at the second opening 15 of the stator 13.

In accordance with the preferred embodiment illustrated in the enclosed figures, the fixing means 27 comprise a plurality of holes 28 made along the circumferential edge of the distribution disc 7 and screw means 29 associated with the distribution spouts 8 and fixable in the holes 28.

Otherwise, other equivalent solutions can be provided for fixing the distribution spouts 8 in variable circumferential positions on the circumferential edge of the distribution disc 7, without departing from the scope of the present patent.

In accordance with a further embodiment not illustrated in the enclosed figures, the tangential velocity of the distribution disc 7 carrying the distribution spouts 8 mounted thereon can be different from the advancement velocity of the sowing machine 1 on the ground.

In this manner, the distribution spouts 7 reach the ground with a non-zero relative velocity with respect to the latter, in order to form slots for inserting the doses of seeds and not substantially-circumscribed holes.

Advantageously, the sowing machine 1, object of the present invention, comprises opening means 44 fixed to each spout 8 in order to open the latter at the second opening 15 of the stator 13 and deposit the corresponding dose of seeds on the underlying ground.

In accordance with the preferred embodiment illustrated in the enclosed figures, the opening means 44 of each distribution spout 8 comprise a shutter 45 placed to interfere with the outlet opening 46 of the spout 8, movable between a closed position in which it obstructs the aforesaid outlet opening 46 and an open position in which it is moved away from the spout 8 and at least partially opens the outlet opening 46.

More in detail, the shutter 45 has the form of a shaped plate set on the spout 8 and it is rotatably constrained at one end thereof by means of a pin 47.

The opening means 44 also preferably comprise an actuator element 49 mechanically connected at one end thereof to the shutter 45 and is transversely extended with respect to the lying plane of the distribution disc 7.

More in detail, the actuator element 49 is fixed to the spout 8 outside the distribution disc 7 and is extended through the aforesaid lying plane of the distribution disc 7 itself, terminating with a work end 50.

The opening means 44 also comprise at least one spring 48 connected on one side to the work end 50 of the actuator element 49 and on the other side is connected to the distribution disc 7 on a second face, which is opposite the first face on which the distribution spouts 8 are fixed.

The spring 48 is adapted to maintain the shutter 45 in closed position during the rotation of the distribution disc 7.

The opening means 44 advantageously comprise a shaped slide 51 with substantially curved shape and fixed to the support structure 6 of the sowing unit 5 at the second opening 15 of the stator 13.

In operation, upon rotating the distribution disc 7 around its rotation axis X, the work end 50 of the opening means 44 interferes with the shaped slide, sliding on the latter, moving away from the shutter 45.

In this manner, the actuator element 49 forces the shutter 45 to rotate around the pin 47, by moving the shutter 45 from the closed position to the open position in order to allow the dose of seeds contained in the distribution spout to be precisely deposited on the ground.

Advantageously, the sowing machine 1, object of the present invention, also comprises first cleaning means 52 mechanically associated with the rotor 11 in order to clean the cells 12.

More in detail, the first cleaning means 52 comprise a first brush 53 with substantially cylindrical form and rotatably mounted on the support structure 6 around an axis parallel to the rotation axis X of the distribution disc, at the lateral wall of the rotor 11, to intercept the cells 12 in order to clean them.

The first cleaning means 52 preferably comprise a second transmission belt 54 wound as a ring around a pulley integral with the rotor 11 and with the first brush 53 in order to drive the latter in rotation.

Advantageously, the sowing machine, object of the present invention, also comprises second cleaning means 55 comprising a second brush 56 rotatably and idly mounted on the support structure 6 of the sowing unit 5 around an axis parallel to the rotation axis X of the distribution disc 7.

More in detail the second brush 56 is placed to intercept the outlet openings 46 of the distribution spouts 7 in order to clean them during the rotation of the distribution disc 7, in order to remove possible waste or parts of seeds.

Advantageously, the distribution means comprise an elastically pliable bottom wall inserted within each cell 12.

Elastic means are also advantageously provided for connecting the bottom wall to the rotor 11.

In operation, upon rotating the rotor 11, the seeds contained in the cell 12 above the bottom wall, when they reach the edge of the stator 13 defining the first opening, push the bottom wall radially towards the center of the rotor 11 itself, without being damaged.

More in detail, the seeds thrust in rotation by the rotor 11 impact the stator 13 and in particular the edge that defines the first opening, forming a layer of seeds between the stator 13 and the rotor 11. Such layer of seeds pushes the bottom wall that contains them radially towards the rotation axis of the rotor 11 itself.

In this manner, the distribution means 1, object of the present invention, allows maintaining a high sowing yield since substantially no seed is damaged, interfering with the stator 13 after having been housed within one of the cells 12 of the rotor 11.

The invention thus described therefore attains the pre-established objects.

In particular, the sowing machine 1, object of the present invention, allows synchronizing the cells 12 of the rotor 11 of the distribution means 9 with the distribution spouts 8 fixed to the distribution disc 7 in any work situation and in particular allows synchronizing them upon varying the number of distribution spouts 8.

Indeed, the number of distribution spouts 8 can be easily varied by the user by means of the use of fixing means 27 provided at the circumferential edge of the distribution disc 7.

## Claims

1. Sowing machine for distributing seeds on the ground, which comprises:
- a support frame (2) intended to be fixed to a tractor at coupling points (3);
- at least one hopper (4) for containing seeds to be distributed, supported by said support frame (2);
- at least one sowing unit (5) provided with:
- a support structure (6) mechanically connected to said support frame (2);
- at least one distribution disc (7) rotatably mounted on said support structure (6) in a position raised from the ground and carrying, peripherally mounted thereon, a plurality of equidistant distribution spouts (8);
- distribution means (9) mounted on said support structure (6) connected to said containment hopper (4) in order to receive said seeds therefrom, and cyclically in communication with said distribution spouts (8) in order to release a dose of said seeds at their interior;
- first motorization means (10) connected to said distribution disc (7) in order to rotate it around a rotation axis (X) substantially orthogonal to the advancement direction of said sowing machine (1);
said machine being **characterized in that** said distribution means (9) comprise:
- a rotor (11) peripherally provided with a plurality of equidistant cells (12), each adapted to contain a dose of seeds to be distributed;
- a stator (13) fixed to said support structure (6), externally around said rotor (11), and provided with:
- at least one first opening (14) for cyclically feeding said cells (12) with said doses of seeds;
- a second opening (15) for receiving said doses of seeds from said cells (12) and cyclically discharging them into said distribution spouts (8) of said plurality of spouts;
- at least one manifold (16) mechanically associated with said first opening (14) of said stator (13) connected with said containment hopper (4) and cyclically with said cells (12) in order to transfer thereto doses of said seeds to be distributed;
- second motorization means (17) connected to said rotor (11) in order to rotate it inside said stator (13) in order to cyclically face said cells (12) at said first opening (14); wherein said second motorization means (17) comprise at least one motor (23) fixed to said support structure (6) or to said stator (13); second transmission means (24) being connected to said motor (23) and to said rotor (11) in order to rotate the latter;
- a logic control unit (18) electrically connected to said first motorization means (10) and to said second motorization means (17), which controls said first motorization means (10) and said second motorization means (17), synchronizing the position of said distribution spouts (8) and of said cells (12) at said second opening (15).

2. Sowing machine for distributing seeds on the ground according to claim 1, **characterized in that** it comprises:
- at least one first sensor (19) mechanically associated with said support structure (6) connected to said logic control unit (18), adapted to detect the passage of said distribution spouts (8) of said plurality of spouts;
- a second sensor (20) mechanically associated with said support structure (6) connected to said logic control unit (18), adapted to detect the passage of said cells (12) of said plurality of cells.

3. Sowing machine for distributing seeds on the ground according to claim 2, **characterized in that** said first sensor (19) detects an appendage (21) of said distribution spouts (8).

4. Sowing machine for distributing seeds on the ground according to claim 2, **characterized in that** said second sensor (20) detects a metal element fixed to the rotor (11) at said cells (12).

5. Sowing machine for distributing seeds on the ground according to any one of the preceding claims, **characterized in that** it comprises at least one velocity sensor (22) connected to said logic control unit (18) in order to adjust the relative tangential velocity of the distribution spouts (8) with respect to the ground.

6. Sowing machine for distributing seeds on the ground according to claim 1, **characterized in that** said second transmission means (24) comprise a first gear wheel (25) peripherally fixed to said rotor and a second gear wheel (26) fitted on the shaft of said motor (23) and mechanically engaged with said first gear wheel (25).

7. Sowing machine for distributing seeds on the ground according to claim 1, **characterized in that** said logic control unit (18) commands said first motorization means (10) and said second motorization means (17) to rotate said distribution disc (7) and said rotor (11) with a ratio of their tangential velocities equal to the ratio between the length of a first arc of circumference (D1) which is defined between two said contiguous distribution spouts (8) and the length of a second arc of circumference (D2) which is defined between two contiguous said cells (12).

8. Sowing machine for distributing seeds on the ground according to any one of the preceding claims, **characterized in that** it comprises fixing means (27) for fixing said distribution spouts (8) along a circumferential edge of said distribution disc (7), and equidistant at selectable distance.

9. Sowing machine for distributing seeds on the ground according to claim 8, **characterized in that** said fixing means (27) comprise a plurality of holes (28) made along said circumferential edge of said distribution disc (7) and screw means (29) associated with said distribution spouts (8) and fixable in said holes.

## Patentansprüche

1. Sämaschine zum Verteilen von Saatgut auf dem Boden, die der Folgenden umfasst:
- einen Tragrahmen (2), der dazu bestimmt ist, an Kupplungspunkten (3) auf einem Traktor befestigt zu werden;
- mindestens einen Trichter (4) zum Aufnehmen des zu verteilenden Saatguts, der von dem genannten Tragrahmen (2) getragen wird;
- mindestens ein Sägegerät (5), das mit Folgendem ausgestattet ist:
- einer Tragstruktur (6), die mechanisch mit dem genannten Tragrahmen (2) verbunden ist;
- mindestens einer drehbar auf der genannten Tragstruktur (6) in einer vom Boden erhobenen Position montierten Verteilerscheibe (7), die eine Vielzahl darauf in gleichem Abstand auf dem Rand montierten Verteilerstutzen (8) trägt;
- Verteilermittel (9), die auf der genannten Tragstruktur (6) montiert und mit dem genannten Aufnahmetrichter (4) verbunden sind, um das genannte Saatgut daraus zu erhalten und zyklisch mit den genannten Verteilerstutzen (8) verbunden werden, um eine Dosis des genannten Saatguts in deren Inneres abzugeben;
- erste Motorisierungsmittel (10), die mit der genannten Verteilerscheibe (7) verbunden sind, um diese um eine im Wesentlichen zur Fahrtrichtung der genannten Sämaschine (1) rechtwinklige Drehachse (X) zu drehen;
wobei die Maschine **dadurch gekennzeichnet ist, dass** die genannten Verteilermittel (9) Folgendes umfassen:
- einen Rotor (11), der außen mit einer Vielzahl von in gleichem Abstand befindlichen Zellen (12) ausgestattet ist, von denen jede geeignet ist, eine Dosis des zu verteilenden Saatguts zu enthalten;
- einen Stator (13), der an der genannten Tragstruktur (6) außen um den genannten Rotor (11) herum befestigt und mit Folgendem ausgestattet ist:
- mindestens einer ersten Öffnung (14) zum zyklischen Beschicken der genannten Zellen (12) mit den genannten Dosen Saatgut;
- einer zweiten Öffnung (15) zum Aufnehmen der genannten Dosen Saatgut aus den genannten Zellen (12) und zur zyklischen Abgabe derselben in die genannten Verteilerstutzen (8) der genannten Vielzahl Stutzen;
- mindestens einen Verteiler (16), der mechanisch mit der ersten Öffnung (14) des genannten Stators (13) gekuppelt und mit dem genannten Fülltrichter (4) und zyklisch mit den genannten Zellen (12) verbunden ist, um die Dosen des genannten zu verteilenden Saatguts zu diesen zu befördern;
- zweite Motorisierungsmittel (17), die mit dem genannten Rotor (11) verbunden sind, um diesen im Inneren des genannten Stators (13) zu drehen und so zyklisch an der genannten ersten Öffnung (14) vor die genannten Zellen (12) zu gelangen; wobei die genannten zweiten Motorisierungsmittel (17) mindestens einen an der genannten Tragstruktur (6) oder dem genannten Stator (13) befestigten Motor (23) umfassen; wobei die genannten Übertragungsmittel (24) mit dem genannten Motor (23) und dem genannten Rotor (11) verbunden sind, um Letzteren zu drehen;
- ein logisches Steuergerät (18), das elektrisch an die genannten ersten Motorisierungsmittel (10) und an die genannten zweiten Motorisierungsmittel (17) angeschlossen ist, die die genannten ersten Motorisierungsmittel (10) und die genannten zweiten Motorisierungsmittel (17) steuert und so die Position der genannten Verteilerstutzen (8) und der genannten Zellen (12) an der genannten Öffnung (15) synchronisiert.

2. Sämaschine zum Verteilen von Saatgut auf dem Boden nach Anspruch 1, **dadurch gekennzeichnet, dass** sie Folgendes umfasst:
- mindestens einen ersten Sensor (19), der mechanisch mit der genannten Tragstruktur (6) gekuppelt und an das genannte logische Steuergerät (18) angeschlossen und geeignet ist, den Durchlauf der genannten Verteilerstutzen (8) der genannten Vielzahl von Stutzen zu erfassen;
- einen zweiten Sensor (20), der mechanisch mit der genannten Tragstruktur (6) gekuppelt und an das genannte logische Steuergerät (18) angeschlossen und geeignet ist, den Durchlauf der genannten Zellen (12) der genannten Vielzahl von Zellen zu erfassen.

3. Sämaschine zum Verteilen von Saatgut auf dem Boden nach Anspruch 2, **dadurch gekennzeichnet, dass** der genannte erste Sensor (19) ein Zusatzstück (21) der genannten Verteilerstutzen (8) erfasst.

4. Sämaschine zum Verteilen von Saatgut auf dem Boden nach Anspruch 2, **dadurch gekennzeichnet, dass** der genannte zweite Sensor (20) ein an den genannten Zellen (12) am Rotor (11) befestigtes Metallelement erfasst.

5. Sämaschine zum Verteilen von Saatgut auf dem Boden nach einem beliebigen der vorangegangenen Ansprüche, **dadurch gekennzeichnet, dass** sie mindestens einen an das genannte logische Steuergerät (18) angeschlossenen Geschwindigkeitssensor (22) umfasst, um die relative Tangentialgeschwindigkeit der Verteilerstutzen (8) im Verhältnis zum Boden einzustellen.

6. Sämaschine zum Verteilen von Saatgut auf dem Boden nach Anspruch 1, **dadurch gekennzeichnet, dass** die genannten zweiten Übertragungsmittel (24) ein an der Außenseite des genannten Rotors befestigtes erstes Getrieberad (25) und ein an der Welle des genannten Motors (23) angebrachtes und mechanisch mit dem genannten ersten Getrieberad (25) im Eingriff befindliches zweites Getrieberad (26) umfassen.

7. Sämaschine zum Verteilen von Saatgut auf dem Boden nach Anspruch 1, **dadurch gekennzeichnet, dass** das genannte logische Steuergerät (18) die genannten ersten Motorisierungsmittel (10) und die genannten zweiten Motorisierungsmittel (17) steuert, um die genannte Verteilerscheibe (7) und den genannten Rotor (11) mit einem Verhältnis ihrer Tangentialgeschwindigkeiten zu drehen, die dem Verhältnis zwischen der Länge eines zwischen zwei genannten angrenzenden Verteilerstutzen (8) definierten Kreisbogens (D1) und der Länge eines zwischen zwei angrenzenden genannten Zellen (12) definierten zweiten Kreisbogens (D2) entspricht.

8. Sämaschine zum Verteilen von Saatgut auf dem Boden nach einem beliebigen der vorangegangenen Ansprüche, **dadurch gekennzeichnet, dass** sie Befestigungsmittel (27) zum Befestigen der genannten Verteilerstutzen (8) entlang einer Außenkante der genannten Verteilerscheibe (7) und in einem wählbaren gleichen Abstand umfasst.

9. Sämaschine zum Verteilen von Saatgut auf dem Boden nach Anspruch 8, **dadurch gekennzeichnet, dass** die genannten Befestigungsmittel (27) eine Vielzahl von Öffnungen (28) entlang der genannten Außenkante der genannten Verteilerscheibe (7) und mit den genannten Verteilerstutzen (8) verbundene und in den genannten Öffnungen zu befestigende Schraubenelemente (29) umfasst.

## Revendications

1. Semoir pour la distribution de graines sur le sol, qui comprend :
- un cadre de support (2) destiné à être fixé à un tracteur en des points de couplage (3) ;
- au moins une trémie (4) pour stocker les graines à distribuer, supportée par ledit cadre de support (2) ;
- au moins une unité de semoir (5) munie de :
- une structure de support (6) connectée mécaniquement audit cadre de support (2) ;
- au moins un disque de distribution (7) monté de manière rotative sur ladite structure de support (6) en une position surélevée par rapport au sol et portant, montés sur la périphérie de celui-ci, une série de becs de distribution (8) équidistants ;
- des moyens de distribution (9) montés sur ladite structure de support (6) connectés à ladite trémie de stockage (4) afin de recevoir lesdites graines à partir de celle-ci, et en communication cyclique avec lesdits becs de distribution (8) afin de libérer une dose desdites graines depuis celle-ci ;
- de premiers moyens de motorisation (10) connectés audit disque de distribution (7) afin de mettre celui-ci en rotation autour d'un axe de rotation (X) sensiblement orthogonal à la direction d'avancement dudit semoir (1) ;
ladite machine étant **caractérisée en ce que** lesdits moyens de distribution (9) comprennent :
- un rotor (11) muni sur sa périphérie d'une série de cellules équidistantes (12), chacune destinée à stocker une dose de graines à distribuer ;
- un stator (13) fixé à ladite structure de support (6), de manière externe autour dudit rotor (11), et muni de :
- au moins une première ouverture (14) pour l'alimentation cyclique desdites cellules (12) au moyen desdites doses de graines ;
- une deuxième ouverture (15) pour réceptionner lesdites doses de graines depuis lesdites cellules (12) et les décharger de manière cyclique dans lesdits becs de distributions (8) de ladite série de becs ;
- au moins un collecteur (16) associé mécaniquement à ladite première ouverture (14) dudit stator (13) connecté à ladite trémie de stockage (4) et de manière cyclique, auxdites cellules (12) afin d'y transférer des doses desdites graines à distribuer ;
- des deuxièmes moyens de motorisation (17) connectés audit rotor (11) afin de le mettre en rotation à l'intérieur dudit stator (13) de manière à mettre en face à face et de manière cyclique, lesdites cellules (12) avec ladite première ouverture (14) ; dans lequel lesdits deuxièmes moyens de motorisation (17) comprennent au moins un moteur (23) fixé à ladite structure de support (6) ou audit stator (13) ; des deuxièmes moyens de transmission (24) étant connectés audit moteur (23) et audit rotor (11) afin de faire tourner ce dernier ;
- une unité logique de commande (18) connectée électriquement auxdits premiers moyens de motorisation (10) et auxdits deuxièmes moyens de motorisation (17), qui contrôle lesdits premiers moyens de motorisation (10) et lesdits deuxièmes moyens de motorisation (17), pour synchroniser la position desdits becs de distribution (8) et desdites cellules (12) au niveau de ladite deuxième ouverture (15).

2. Semoir pour la distribution de graines sur le sol selon la revendication 1, **caractérisé en ce qu'**il comprend :
- au moins un premier capteur (19) associé mécaniquement à ladite structure de support (6) connecté à ladite unité logique de commande (18), destiné à détecter le passage desdits becs de distribution (8) de ladite série de becs ;
- un deuxième capteur (20) associé mécaniquement à ladite structure de support (6) connecté à ladite unité logique de commande (18), destiné à détecter le passage desdites cellules (12) de ladite série de cellules.

3. Semoir pour la distribution de graines sur le sol selon la revendication 2, **caractérisé en ce que** ledit premier capteur (19) détecte un appendice (21) desdits becs de distribution (8).

4. Semoir pour la distribution de graines sur le sol selon la revendication 2, **caractérisé en ce que** le deuxième capteur (20) détecte un élément métallique fixé au rotor (11) au niveau desdites cellules (12).

5. Semoir pour la distribution de graines sur le sol selon l'une des revendications précédentes, **caractérisé en ce qu'**il comprend au moins un capteur de vitesse (22) connecté à ladite unité logique de commande (18) afin d'ajuster la vitesse tangentielle relative des becs de distribution (8) par rapport au sol.

6. Semoir pour la distribution de graines sur le sol selon la revendication 1, **caractérisé en ce que** les deuxièmes moyens de transmission (24) comprennent une première roue d'engrenage (25) fixée sur la périphérie dudit rotor et une deuxième roue d'engrenage (26) ajustée sur l'arbre dudit moteur (23) et en engagement mécanique avec ladite première roue d'engrenage (25).

7. Semoir pour la distribution de graines sur le sol selon la revendication 1, **caractérisé en ce que** ladite unité logique de commande (18) commande lesdits premiers moyens de motorisation (10) et lesdits deuxièmes moyens de motorisation (17) pour mettre en rotation ledit disque de distribution (7) et ledit rotor (11) avec un rapport de leur vitesse tangentielle égal au rapport entre la longueur d'un premier arc de circonférence (D1), qui est défini entre deux becs de distribution (8) contigus et la longueur d'un deuxième arc de circonférence (D2) qui est défini entre deux cellules (12) contiguës.

8. Semoir pour la distribution de graines sur le sol selon l'une quelconque des revendications précédentes, **caractérisé en ce qu'**il comprend des moyens de fixation (27) pour fixer lesdits becs de distribution (8) le long d'un bord de circonférence dudit disque de distribution (7), équidistants et à une distance sélectionnable.

9. Semoir pour la distribution de graines sur le sol selon la revendication 8, **caractérisé en ce que** lesdits moyens de fixation (27) comprennent une série de trous (28) prévus le long du bord de circonférence dudit disque de distribution (7) et des moyens de vissage (29) associés auxdits becs de distribution (8) et pouvant être fixés dans lesdits trous.
